# EUROPEAN PATENT APPLICATION

(11) **EP 4 685 691 A1**
(43) Date of publication of application: **28.01.2026**
(21) Application number: 24774308.1
(22) Date of filing: 12.03.2024
(51) Int. Cl.: G06K 19/06, G06K 7/00, G06V 10/00

(54) **CODE FOR PACKAGES, PRODUCTS OR DOCUMENTS, AND PRODUCTS, PACKAGES OR DOCUMENTS PROVIDED WITH THE CODE, AND METHOD FOR EXTRACTING THE INFORMATION CONTAINED IN THE CODE**

(30) Priority: 22.03.2023 ES 202330237
(71) Applicant: Nuevos Sistemas Technologicos S.L., 30100 Murcia (ES)
(72) Inventor: PITA LOZANO, Javier, 30100 Murcia (ES); SÁEZ MARTÍNEZ, Juan Manuel, 30100 Murcia (ES)
(74) Representative: Balder IP Law, S.L.
(86) International application number: PCT/ES2024/070155
(87) International publication number: WO 2024/194508

(57) **Abstract**

The invention relates to a code (1), made up of a first code (Q1) and a second code (Q2), wherein the maximum reading distance (L1) of the first code (Q1) by a camera (CA) is smaller than the second maximum distance (L2) of the second code (Q2); and the information density (D1) of the first code (Q1) is greater than the information density (D2) of the second code, and wherein the first code (Q1) occupies a square central region and wherein the second code (Q2) is a frame (M1) made up of squares of at least two different colors (C1, C2) or two different shades that entirely surrounds the first code (Q1) on all four sides. The invention also relates to a packaging, product, or document provided with the code and also to a method for extracting the information contained in the code (1).

## Description

### TECHNICAL FIELD

The present invention relates to codes for packaging, products, or documents or visual media and intended to facilitate access to information, more particularly for those visually impaired.

### BACKGROUND

Patterns to locate codes consisting of QR codes in three squares arranged in three corners are known. In this case, they are considered as part of the code itself.

Moreover, improving location capacity by providing locators outside the main code itself has already been conceptualized. A solution of this type consists of successions of collinear circles and rectangles.

Completely locating codes of this type requires four, three-by-three, non-collinear points on the image. Since it is formed by points on two straight segments, there are no four points exclusively in the code that meet this requirement. Therefore, in some known solutions, one of the location squares typical of the QR code that it has inside is furthermore used. The more information the QR code has, the greater the resolution it requires, causing the squares to become increasingly smaller, reducing the detection distance of the long-range marker. Therefore, the solutions of the state of the art based on rectangles and circles depend on the code they accompany.

Another drawback is that, given its design, the location pattern is very small, as it is at the same scale as the data, which also negatively affects the detection distance.

Moreover, publication ES 1 295 251 U, in the name of the present applicant, discloses a system based on the association of a first code and a second code, the first visible code having associated therewith a first maximum reading distance by a camera and a first information density, the second visible code comprising a second maximum reading distance by the camera and a second information density, and wherein the first maximum distance is smaller than the second maximum distance and the first information density is greater than the second information density, such that the product has a code visible from a great distance, containing information about the location of the other code, which is not visible from far away as it contains much more information than the other code. Once the device has the information to locate the first code, it is now possible to focus on the first code either by means of the same camera by optical focusing or by using another camera having a longer range and a smaller field of view.

The purpose of these codes is so that a visually impaired person can locate a QR code from a distance. To that end, the QR code is arranged adjacent to another long-range code. The camera will be able to read the long-range code from far away and guide the visually impaired user, or even blind people, so that the system can read the QR code from much closer. In other words, it has a long-range location code and the conventional QR code which contains the information.

This long-range code may contain, as described in the mentioned registration, less dense information relating to the product such as, for example, supermarket product category: dairy, meat, fish, etc., or its GTIN, EAN, SKU identifier, etc. whereas the QR-type short-range code may contain specific product information: expiry date, price, batch number, variant, URL, etc. The user can thus decide from far away whether or not he/she is interested in the category in order to move closer and extract all its information.

Consumer product is understood herein as any physical product that can be acquired by a consumer, and particularly products that are likely to be displayed or stocked in stores, on shelves, display racks, or counters. Therefore, it includes, among others, food products, drugstore products, personal hygiene products, or medicines, and in general any product having visible surfaces with the possibility of supporting printed codes or codes adhered by means of an adhesive. In that sense, consumer product can also include clothing, leisure products, sporting goods, etc.

### DESCRIPTION OF THE INVENTION

To overcome the drawbacks of the state of the art, a first aspect of the present invention proposes a code, made up in turn by a first code and a second code, the first code having associated therewith a first maximum reading distance by a camera and a first information density, the second code having associated therewith a second maximum reading distance by the camera and a second information density and wherein:
- the first maximum distance is smaller than the second maximum distance; and
- the first information density is greater than the second information density,
and wherein the first code occupies a square central region and wherein the second code is a frame made up of squares of at least two different colors or two different shades that entirely surrounds the first code on all four sides.

In other words, according to the present invention, a system based on a code is proposed, in which data is coded along the perimeter, but with the use of a square-based framework, overcoming the drawbacks of known perimetral or partially perimetral solutions.

In some embodiments, the second code comprises a location mark made up of a first location frame external to the frame made up of squares and a second location frame external and adjacent to the first location frame.

In other words, preferably the code according to the invention comprises a double location frame. This double location frame provides complete independence with respect to the inner code, so different types of inner code of any density are allowed, without affecting the detection of the location code.

In some embodiments, the location frames have a different color and/or shade.

In other embodiments, the first location frame is black and the second location frame is white.

In either case, the range of detection is greater than known codes because, by being independent of the inner code, long-range detection depends only on the resolution of the location code, regardless of the density of the inner code.

Another advantageous aspect of the location frame that has been able to be experimentally proven is that, by using elements with a larger size in relation to the dense inner code, locating is much easier in adverse conditions, such as when moving. Solutions based on utilizing the perimeter incompletely and with shapes such as stripes and dots, are highly sensitive to blurring, which is the burring that appears in the image when the camera moves. The solution of the invention claimed herein is robust against blurring because elements of a larger scale are used. This aspect is key for those visually impaired who move the camera constantly given the impossibility to perform framing or focusing.

In some embodiments, in the second code, the squares may have a third and/or a fourth color or a third and a fourth shade.

Preferably, the colors are four different colors, preferably cyan, magenta, yellow, and black.

Solutions based on four shades or four colors allow doubling the density of the code in the same space.

In some embodiments, the first code is a QR code, a Data Matrix code, a barcode, a MaxiCode, a PDF417 code, or an Aztec code.

In some embodiments, there is a separation between the first code and the second code, the separation preferably having one of the colors of the first code.

The invention also relates to a product or packaging comprising a code according to any of the variants according to the invention.

Furthermore, the invention also relates to a printed document comprising a code according to any of the variants according to the invention. It can be a menu, an official document, etc.

Finally, the invention can also be applied to a virtual document displayed on a screen.

In summary, the code according to the invention provides a system for locating dense codes which is independent of the code to be located, so it is not restricted to QR codes. For the same reasons, the characteristics of the code to be located do not condition the reading of the locator code. The elements of the code are compatible with scales greater than known proposals, so the location is much earlier (greater range) and more robust to camera movements (blurring).

### BRIEF DESCRIPTION OF THE DRAWINGS

As a complement to the description, and for the purpose of helping to make the features of the invention more readily understandable, in accordance with practical exemplary embodiments of the invention, said description is accompanied by a set of figures which, by way of illustration and not limitation, represent the following:
Figure 1 shows a code according to the invention, in which the dense inner QR code is black on white.
Figure 2 shows a code according to the invention, in which the dense inner QR code is white on black.
Figure 3 shows a system in which a code according to the invention is used.
Figures 4 to 13 show various codes according to different variants of the invention.

### DESCRIPTION OF A PREFERRED EMBODIMENT OF THE INVENTION

In the description of the possible preferred embodiments of the invention, numerous details must be provided to better understand the invention. Even so, it will be apparent to the person skilled in the art that the invention can be implemented without these specific details. On the other hand, well-known features have not been described in detail to avoid unnecessarily complicating the description.

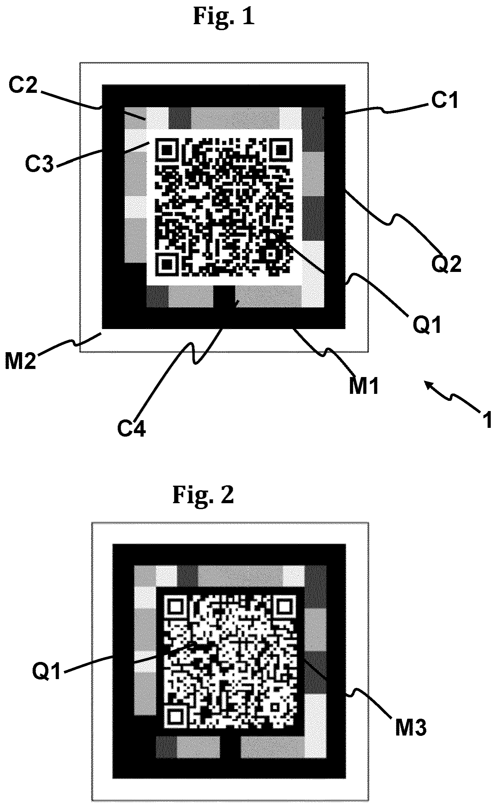

As shown in Figure 1, the invention relates to a code 1, made up in turn by a first code Q1 and a second code Q2, the first code Q1 having associated therewith a first maximum reading distance L1 by a camera CA and a first information density D1, the second code Q2 having associated therewith a second maximum reading distance L2 by the camera CA and a second information density D2, and wherein:
- the first maximum distance L1 is smaller than the second maximum distance L2; and
- the first information density D1 is greater than the second information density D2.

In other words, a system based on the inventive code is known to allow a camera CA to locate a second code Q2, which contains information to locate the denser first code Q1.

According to the invention, the first code Q1 occupies a square central region and the second code Q2 is a frame M1 made up of squares of at least two different colors C1, C2 or two different shades that entirely surrounds the first code Q1 on all four sides.

This solution allows locating the code from distances more than sufficient for the application thereof on products displayed in stores. Furthermore, it allows reading dense codes of much smaller size than those commonly used.

According to a particularly preferred embodiment, the second code Q2 comprises a location mark PA, P2 made up of a first location frame P1 external to the frame M1 made up of squares and a second location frame P2 external and adjacent to the first location frame P1.

As set forth above, this location element is highly efficient.

Furthermore, as with the colored square-based perimeter, it has the advantage of being aesthetically pleasing due to its symmetry.

In the embodiments shown in Figures 1 to 13, the first location frame P1 is black and the second location frame P2 is white. Said frames having two different colors, particularly so that they coincide with the colors of the packaging to which they are applied, can also be envisaged.

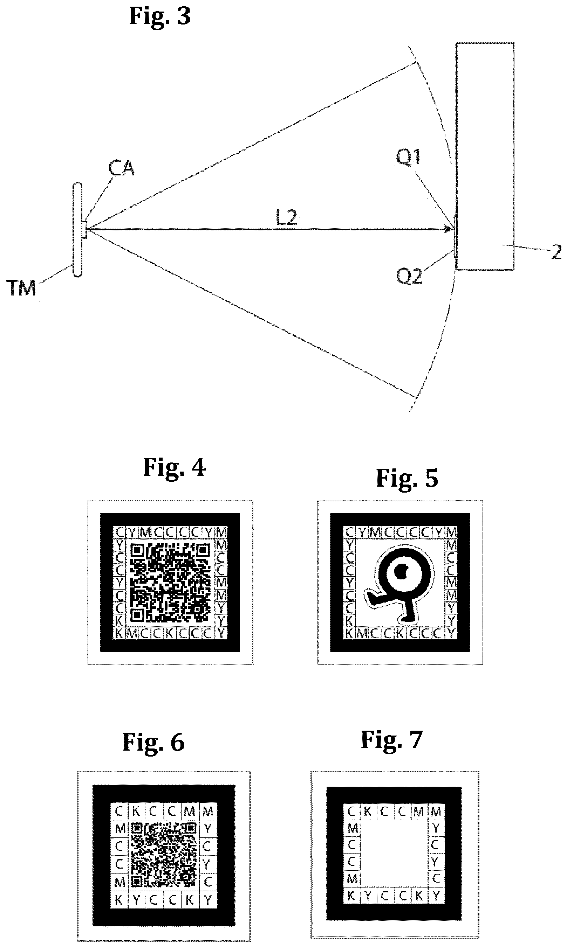

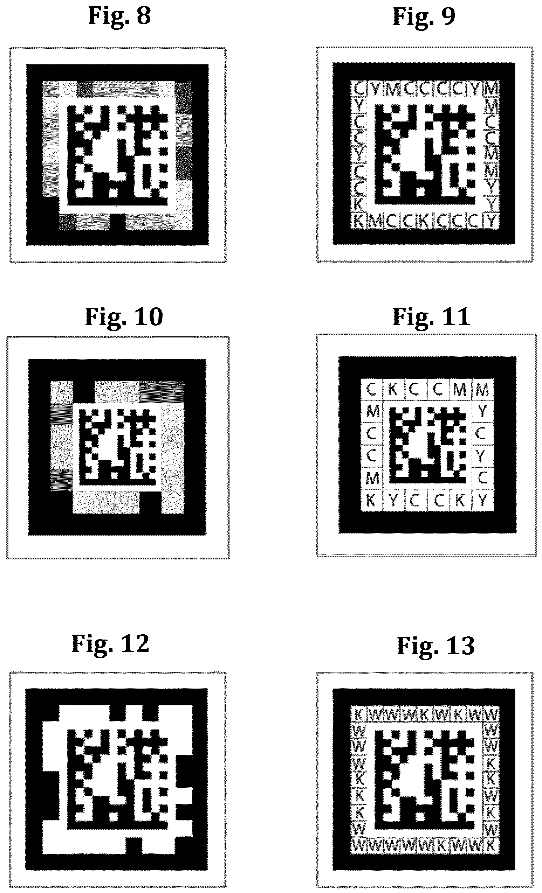

With respect to the second code Q2, it can be envisaged for them to have four different colors, particularly cyan, magenta, yellow, and black as can be seen in Figures 1 and 2. In Figures 9 and 11, although they have been depicted in black and white, the four colors of the squares have been indicated by means of initials. Figure 4 proposes a solution in which only two colors are used for the second code Q2.

It can also be seen in the figures that both QR codes and Data Matrix codes can be used as dense codes Q1 and, though not depicted, the invention is also applicable to barcodes, MaxiCodes, PDF417 codes, or Aztec codes.

Figure 3 shows the application of the invention to a product 2. However, for one skilled in the art many other applications such as, for example, to a printed document or an on-screen representation will be apparent.

Embodiments in which the second code is made up of 20 or 32 cells have been depicted. However, it is obvious that the invention can be applied to other combinations.

The invention also relates to a method for extracting the information contained in a code 1 as defined in any of the inventive variants, comprising the steps of:
a) detecting and reading the second visible code Q2 with the camera CA being arranged at a distance greater than the first maximum distance L1 and smaller than the second maximum distance L2;
b) extracting from the geometry of the second visible code Q2 information relating to the relative position of the first visible code Q1 with respect to the second visible code Q2, regardless of the class or composition of the first visible code Q1;
c) based on said information, framing the image region in which the first visible code Q1 is located.

In view of this description and figures, the person skilled in the art may understand that the invention has been described according to some preferred embodiments thereof, but that multiple variations may be introduced in said preferred embodiments, without leaving the object of the invention as claimed.

In this text, the term "comprise(s)" and its derivations (such as "comprising", etc.) should not be understood in an exclusive sense. That is to say, these terms should not be interpreted as excluding the possibility that what is described and defined may include more elements, stages, etc.

## Claims

1. A code (1), made up in turn by a first code (Q1) and a second code (Q2), the first code (Q1) having associated therewith a first maximum reading distance (L1) by a camera (CA) and a first information density (D1), the second code (Q2) having associated therewith a second maximum reading distance (L2) by the camera (CA) and a second information density (D2), and wherein:
- the first maximum distance (L1) is smaller than the second maximum distance (L2); and
- the first information density (D1) is greater than the second information density (D2), **characterized in that** the first code (Q1) occupies a square central region and **in that** the second code (Q2) is a frame (M1) made up of squares of at least two different colors (C1, C2) or two different shades that entirely surrounds the first code (Q1) on all four sides.

2. The code (1) according to claim 1, wherein the second code (Q2) comprises a location mark (PA, P2) made up of a first location frame (P1) external to the frame (M1) made up of squares and a second location frame (P2) external and adjacent to the first location frame (P1).

3. The code (1) according to claim 2, wherein the location frames (P1, P2) have a different color and/or shade.

4. The code (1) according to claim 2, wherein the first location frame (P1) is black and the second location frame (P2) is white.

5. The code according to any of the preceding claims, comprising squares (C3, C4) having a third and/or fourth color or a third and a fourth shade (C3, C4).

6. The code according to claim 5, wherein the colors are four different colors (C1, C2, C3, C4), preferably cyan, magenta, yellow, and black.

7. The code according to any of the preceding claims, wherein the first code (Q1) is a QR code, a Data Matrix code, a barcode, a MaxiCode, a PDF417 code, or an Aztec code.

8. The code according to any of the preceding claims, wherein there is a separation (M3) between the first code (Q1) and the second code (Q2), the separation (M3) preferably having one of the colors of the first code (Q1).

9. A product or packaging (2) comprising a code according to any of claims 1 to 8.

10. A printed document comprising a code according to any of claims 1 to 8.

11. A virtual document comprising a code according to any of claims 1 to 8.

12. A method for extracting the information contained in a code (1) as defined in any of claims 1 to 8, comprising the steps of:
a) detecting and reading the second visible code (Q2) with the camera (CA) being arranged at a distance greater than the first maximum distance (L1) and smaller than the second maximum distance (L2);
b) extracting from the geometry of the second visible code (Q2) information relating to the relative position of the first visible code (Q1) with respect to the second visible code (Q2), regardless of the class or composition of the first visible code (Q1);
c) based on said information, framing the image region in which the first visible code (Q1) is located.
